# FASCICULE DE BREVET EUROPEEN

(11) **EP 0 679 126 B1**
(45) Date de publication et mention de la délivrance du brevet: **18.03.1998**
(21) Numéro de dépôt: 95901484.6
(22) Date de dépôt: 14.11.1994
(51) Int. Cl.: B60G 21/055, B60B 35/06

(54) **TRAIN ARRIERE DE VEHICULE A ESSIEU SEMI-RIGIDE**
FAHRZEUG-HINTERRADSATZ MIT EINER HALBSTEIFEN ACHSE
SEMI-RIGID REAR AXLE ASSEMBLY FOR MOTOR VEHICLES

(30) Priorité: 16.11.1993 FR 9313658; 05.04.1994 FR 9403992
(43) Date de publication de la demande: 02.11.1995
(73) Titulaire: SOLLAC, 92800 Puteaux (FR)
(72) Inventeur: PHAM, Anh, Tuan, F-78990 Elancourt (FR)
(74) Mandataire: Lanceplaine, Jean-Claude
(86) Numéro de dépôt international: FR9401325
(87) Numéro de publication internationale: WO9513931

(56) Documents cités:
- EP-A- 0 156 705
- DE-A- 2 425 740
- DE-A- 4 021 569
- FR-A- 2 269 429
- FR-A- 2 591 155
- US-A- 4 165 099
- US-A- 4 486 030

## Description

La présente invention concerne les essieux arrière de véhicules automobiles et leurs dispositifs de suspension.

De façon plus précise, elle vise un essieu en U ou en H dit semi-rigide, du type comportant deux bras de suspension longitudinaux portant chacun une fusée de roue, reliés par une poutre transversale qui constitue la branche transversale du H ou du U et qui possède une section ouverte dont l'ouverture est dirigée vers l'avant du véhicule, cet essieu étant relié à la partie suspendue du véhicule par des articulations élastiques et par des jambes de force comportant chacune un amortisseur et un ressort hélicoïdal disposés concentriquement, dont les points d'attache respectifs sur les bras de suspension sont proches des fusées de roue.

Dans son principe, un tel essieu vise à faire remplir une partie de la fonction élasticité de la suspension par une structure flexible comprenant les deux bras de suspension et la poutre transversale à section ouverte, qui travaille principalement en torsion. Ce type d'essieu offre une grande rigidité à l'égard des efforts transversaux et longitudinaux tout en restant relativement souple en torsion.

On connaît un essieu de forme générale en U ou en H présentant une grande rigidité à l'égard du ripage, c'est à dire d'un effort transversal exercé sur les roues arrière. Cet essieu comprend deux bras de suspension tubulaires résistant en flexion et reliés par une poutre soudée en bout, des renforts étant prévus dans la zone de liaison entre les bras de suspension et cette poutre. La poutre transversale est constituée par un profilé à section ouverte tandis que les bras de suspension tubulaires peuvent être réalisés sous la forme de deux demi coquilles soudées entre elles.

Un tel essieu présente l'inconvénient d'être peu rigide dans la zone de transition entre le bras de suspension et la poutre transversale, ce qui nécessite la présence d'emboutis de renforcement sur les bras tubulaires. De plus, de tels bras ont un coût de fabrication relativement élevé et sont la source de problèmes de corrosion résultant de leur construction soudée et de leur forme tubulaire.

Par ailleurs, on connaît dans le brevet US-A-4 165 099 un train arrière de véhicule automobile comprenant un essieu en H dit semi-rigide comportant deux bras de suspension longitudinaux portant chacun une fusée de roue, reliés par une poutre transversale. Cet essieu est relié à la partie suspendue du véhicule par des articulations élastiques et par des jambes de force comportant chacune un amortisseur et un ressort hélicoïdal disposés concentriquement. Chaque bras de suspension comprend une plaque métallique fixée à sa partie avant sur la poutre transversale et portant à sa partie arrière la fusée de roue de l'attache de la jambe de forme, cette plaque ayant, sur au moins une partie de sa longueur, une largeur qui varie suivant une fonction sensiblement parabolique.

On connaît également dans les brevets DE-A-2 425 740 et US-A-4 486 030, des trains arrière de véhicule automobile comprenant un essieu en H comportant deux bras de suspension longitudinaux portant chacun une fusée de roue, reliés par une poutre transversale ayant une section ouverte dont l'ouverture est dirigée vers l'avant du véhicule.

L'invention a pour but de proposer un train arrière de véhicule, de type comportant un essieu en H, qui soit de construction plus simple et ne présente pas les inconvénients des agencements connus, tout en étant capable de résister aux différentes contraintes mécaniques rencontrées.

A cet effet, un train arrière comprenant un essieu du type défini précédemment, est caractérisé en ce que chaque bras de suspension comprend deux plaques métalliques sensiblement parallèles, fixées à leur partie avant sur la poutre transversale et portant à leur partie arrière la fusée de roue et l'attache de la jambe de roue, un flasque latéral métallique, perpendiculaire aux plaques et s'étendant le long du bord extérieur de ces dernières, et au moins un flasque intermédiaire métallique fixé entre et perpendiculairement aux plaques et s'étendant sur toute la longueur de ces plaques, lesdites plaques ayant, sur au moins une partie de leur longueur, une largeur qui varie en croissant, depuis une partie arrière, vers une partie avant, suivant une fonction sensiblement parabolique, et ledit flasque latéral et ledit flasque intermédiaire formant un caisson relié à la poutre transversale, Suivant d'autres caractéristiques :
- chaque bras de suspension comprend deux flasques intermédiaires métalliques, fixés entre et perpendiculairement aux plaques, et s'étendant sur toute la longueur de ces plaques, ces flasques intermédiaires et le flasque latéral formant deux caissons reliés à la poutre tansversale ;
- chaque bras de suspension comprend deux tôles embouties formant deux profilés de section en U et emboîtés l'un dans l'autre, les ailes des profilés ayant, sur au moins une partie de leur longueur, une largeur qui varie en croissant, depuis une partie arrière vers une partie avant, suivant une fonction sensiblement parabolique ;
- le fond du profilé extérieur forme un flasque latéral portant un organe d'articulation sur la partie suspendue du véhicule, et la fusée de roue ;
- les ailes du profilé intérieur ont une largeur inférieure aux ailes du profilé extérieur ;
- les extrémités libres des ailes des profilés sont placées bord à bord et le fond du profilé intérieur et le fond du profilé extérieur forment un caisson relié à la poutre transversale ;
- le flasque latéral a une forme générale en S et comporte deux parties d'extrémité sensiblement planes et une partie intermédiaire incurvée ;
- la poutre transversale et l'organe d'articulation sur la partie suspendue sont fixés sur la partie d'extrémité avant du flasque latéral ;
- la poutre transversale est un profilé à section en oméga, dont le plan de symétrie passe sensiblement par les points de contact entre les roues du train et le sol.

L'invention va être décrite plus en détail ci-dessous en se référant aux dessins annexés, donnés uniquement à titre d'exemple, et sur lesquels :
- les figures 1A et 1B sont des schémas illustrant la répartition des contraintes mécaniques dans les bras de suspension, en fonction respectivement d'un effort transversal dû au ripage (figure 1A) et d'un effort longitudinal dû au freinage (figure 1B) ;
- la figure 2 représente schématiquement des bras de suspension optimisés ;
- la figure 3 est une vue de dessus d'un essieu qui ne fait pas partie de l'invention ;
- la figure 4 est une vue en coupe suivant la ligne 4-4 de la figure 3,
- la figure 5 est une demi-vue de dessus d'un essieu de type en H, selon un mode de réalisation de l'invention ;
- la figure 6 est une vue en coupe selon la ligne 6-6 de la figure 5,
- et les figures 7A à 7C sont des vues schématiques en coupe transversale de différentes variantes des bras de suspension.

L'association d'un bras de suspension rigide en flexion et en torsion avec une poutre résistante en flexion mais relativement souple en torsion entraîne des contraintes élevées dans les parties de raccordement entre le bras et la poutre sous l'action combinée des moments de torsion et de flexion. Le problème de résistance à ces contraintes auxquelles est soumis un essieu est un problème difficile à résoudre.

Un essieu du type "semi-rigide" faisant partie d'un train arrière de véhicule automobile doit assurer deux fonctions principales :
- un guidage du train ;

De ce fait, la structure doit offrir une bonne résistance aux efforts horizontaux issus des contacts des roues avec le sol, c'est à dire, les efforts de ripage et de freinage ;
- une rigidité en roulis.

De ce fait, la structure de l'essieu doit présenter une flexibilité adéquate lors des débattements anti-symétriques, relatifs des roues tout en étant neutre vis à vis des débattements desdites roues, sensiblement symétriques par rapport au plan vertical médian du véhicule.

On a remarqué par ailleurs qu'un tel essieu ne supporte pratiquement pas la masse suspendue car l'effort vertical passe directement par la jambe de force en appui au voisinage de la roue.

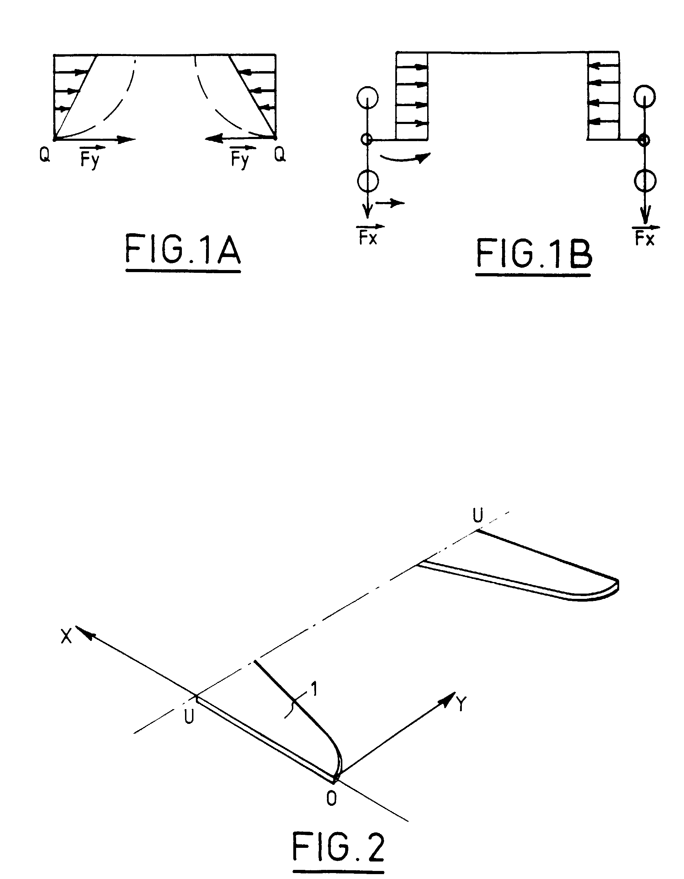

Comme représenté sur la figure 1A, sous l'influence des efforts de contact roue-sol dans le cas d'un ripage où les efforts sont transversaux (par exemple en virage), lesdits efforts Fy appliqués au point de contact Q entre la roue et le sol donnent naissance à des moments fléchissants qui croissent linéairement de l'extrémité arrière du bras jusqu'à son encastrement sur la poutre. Il est souhaitable dans un tel cas que la section du bras ait, du fait de "l'isocontrainte" un profil sensiblement parabolique.

Dans le cas d'un effort longitudinal, en cas de freinage par exemple, comme représenté sur la figure 1B, les efforts Fx appliqués au bras de suspension donnent naissance à des moments fléchissant sensiblement constants.

Comme il n'y a pas d'effort vertical à supporter, la forme optimisée du bras est, comme représenté sur la figure 2, une plaque 1 sensiblement horizontale, à profil parabolique dont l'axe de symétrie OX est perpendiculaire à l'axe de roue OY et à l'axe longitudinal U-U de la poutre, le sommet de la parabole étant situé du côté de l'axe de roue.

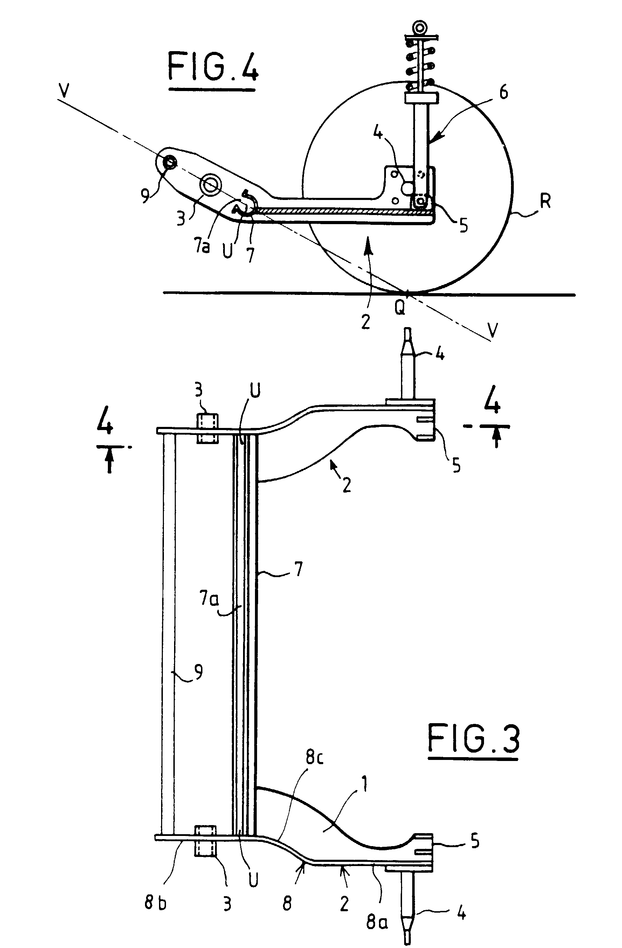

La figure 3 représente une vue de dessus quelque peu schématique, d'un essieu arrière qui ne fait pas partie de l'invention, comprenant deux bras 2 de suspension sensiblement parallèles et portant chacun une chape 3 de fixation de l'essieu sur la structure suspendue du véhicule, une fusée 4 de roue R, une attache 5 pour une jambe de force 6, ainsi qu'une poutre transversale 7 reliant les bras 2 de suspension. La poutre 7 profilée a une section ouverte et son ouverture 7a est orientée vers l'avant du véhicule.

Selon cet essieu chaque bras 2 comporte au moins une plaque 1 et un flasque latéral 8 sensiblement perpendiculaire à la plaque 1, soudés entre eux, sur lesquels sont fixées la chape 3, la fusée 4, l'attache 5 et la poutre 7.

Cette dernière doit offrir une résistance maximale à la flexion sous l'influence des forces de ripage (forces transversales, horizontales) exercées au niveau de la surface contact entre la roue et le sol, représentée par le point Q (Figure 4).

A cet effet, la poutre 7 a, de préférence, en section une forme de oméga dont l'orientation est telle que son plan de symétrie V-V passe sensiblement par le point Q.

La poutre doit posséder également une rigidité en torsion faible, au moins juste nécessaire pour assurer la fonction anti-roulis de l'essieu.

La section ouverte, comme représenté pour un profilé en oméga, permet de réduire la rigidité en torsion. L'ouverture du profil vers l'avant du véhicule a pour but d'éviter un flambement du profilé sous l'effort des forces de ripage.

Dans l'exemple représenté sur les figures 3 et 4, le flasque latéral 8 a une forme en S aplati, avec deux parties d'extrémité 8a, 8b sensiblement rectilignes et une partie intermédiaire incurvée 8c située en arrière de la poutre 7 en oméga. Entre les deux extrémités avant 8b des deux flasques latéraux 8 est disposée une barre anti-roulis 9 qui peut être pleine ou de préférence tubulaire. Les chapes 3 d'articulation sur la partie suspendue du véhicule sont disposées également sur les flasques latéraux 8.

Compte tenu de la forme complexe du bord extérieur de la plaque 1, adjacent au flasque latéral 8, le bord intérieur de cette plaque n'a pas un profil purement parabolique. On peut simplement admettre que dans une portion correspondant à peu près aux deux tiers avant de cette plaque, elle présente une largeur qui varie sensiblement suivant une fonction parabolique. Ceci suppose bien entendu que la plaque ait une épaisseur constante.

On notera que la barre anti-roulis 9 améliore la fonction de guidage du dispositif de suspension. En effet, elle assure à ce dispositif une rigidité accrue, en particulier à l'égard des efforts transversaux de ripage.

Cette barre participe à la rigidité en torsion de l'essieu, elle donne une plus grande possibilité de réglage des caractéristiques en torsion et en flexion, d'une part en fonction de ses caractéristiques propres et d'autre part en fonction de sa position par rapport à l'articulation de l'essieu sur la structure du véhicule.

De préférence, la partie avant du flasque latéral 8 en S est relevée vers le haut et vers l'avant du véhicule comme cela est visible sur la figure 4 et les axes des chapes d'articulation et de la barre anti-roulis sont situés dans le plan V-V de symétrie de la poutre 7.

La poutre 7 et la barre 9, placées de part et d'autre de l'articulation 3 et de préférence à une même distance de celle ci, subissent des torsions égales et de sens inverse. Dans une variante de réalisation la barre 7 et la poutre 9 peuvent être placées d'un même côté de l'articulation 3.

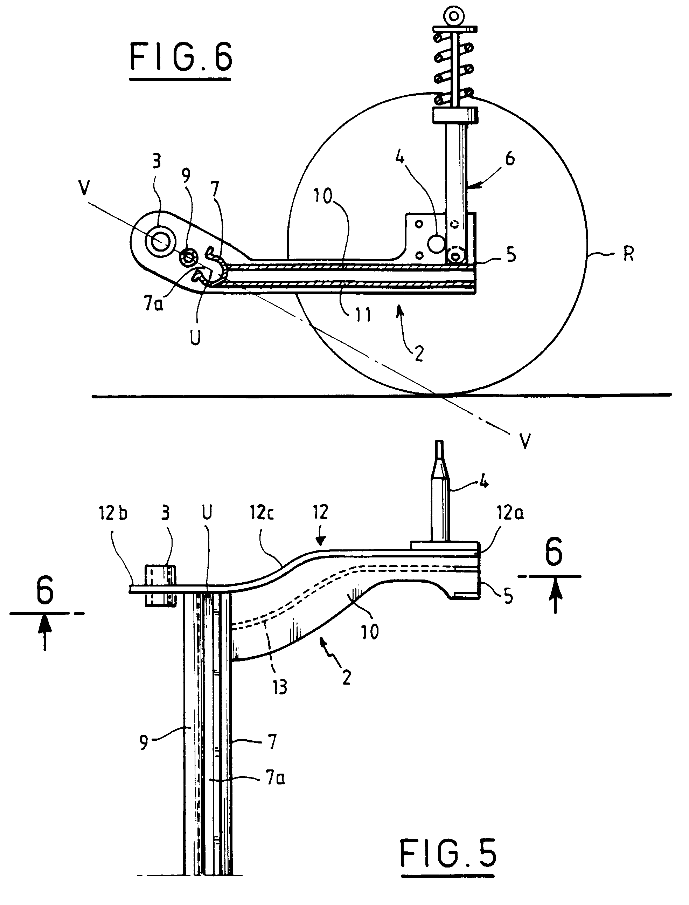

Selon un mode de réalisation de l'invention représenté sur les figures 5, 6 et 7A, chaque bras de suspension 2 comprend, d'une part, deux plaques métalliques 10 et 11 sensiblement parallèles, fixées à leur partie avant sur la poutre tansversale 7 et portant à leur partie arrière la fusée de roue 4 et l'attache 5 de la jambe de force 6 et, d'autre part, un flasque latéral métallique 12 perpendiculaire aux plaques 10 et 11 et s'étendant le long du bord extérieur de ces dernières.

De plus, chaque bras de suspension 2 comprend un flasque intermédiaire métallique 13, fixé par exemple par soudage entre et perpendiculairement aux plaques 10 et 11. Le flasque intermédiaire 13 s'étend sur toute la longueur desdites plaques 10 et 11. Le flasque latéral 12 et le flasque intermédiaire 13 forment un caisson 14 de section sensiblement rectangulaire et relié à la poutre transversale 7.

Les plaques 10 et 11 ont également, sur au moins une partie de leur longueur, une largeur qui varie en croissant, depuis une partie arrière vers une partie avant, suivant une fonction sensiblement parabolique.

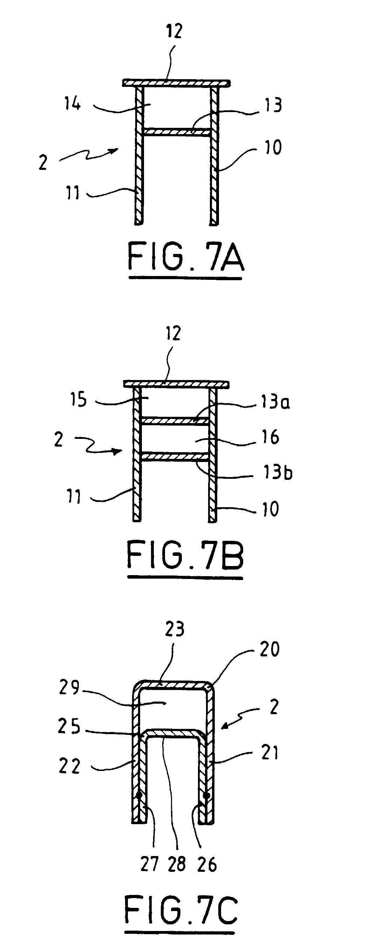

Selon un autre mode de réalisation représenté à la figure 7B, chaque bras de suspension 2 comprend deux flasques intermédiaires métalliques 13a et 13b fixés par exemple par soudage entre et perpendiculairement aux plaques 10 et 11. Ces flasques intermédiaires 13a et 13b forment deux caissons, respectivement 15 et 16, de section sensiblement rectangulaire et reliés à la poutre transversale 7.

Le flasque latéral 12 a une forme en S aplati, avec deux parties d'extrémité 12a et 12b sensiblement rectilignes et une partie intermédiaire incurvée 12c située en arrière de la poutre 7 en oméga. Les chapes 3 d'articulation sur la partie suspendue du véhicule sont disposées également sur les flasques latéraux 12.

La barre anti-roulis 9 est disposée entre les deux extrémités avant 12b des deux flasques latéraux 12 et entre les chapes 3 d'articulation et la poutre 7 en oméga.

De préférence, la partie avant du flaque latéral 12 en S est relevée vers le haut et vers l'avant du véhicule comme représenté sur la figure 6 et les axes des chapes d'articulation et de la barre anti-roulis sont situés dans le plan V-V de symétrie de la poutre 7.

Selon un autre mode de réalisation représenté à la figure 7C, chaque bras de suspension 2 comprend deux tôles emboutis formant deux profilés 20 et 25 de section en U et emboîtés l'un dans l'autre. Les deux profilés 20 et 25 sont fixés l'un à l'autre par exemple par soudage.

Les ailes 21, 22 et 26, 27 ont, sur au moins une partie de leur longueur, une largeur qui varie en croissant depuis une partie arrière vers une partie avant, suivant une fonction sensiblement parabolique.

Le fond 23 du profilé extérieur 20 forme un flasque latéral, de forme identique aux flasques latéraux des précédents modes de réalisation, portant l'organe 3 d'articulation sur la partie suspendue du véhicule, la poutre 7 en oméga et la barre anti-roulis 9.

De préférence, les ailes 26 et 27 du profilé intérieur 25 ont une largeur inférieure aux ailes 21 et 22 du profilé extérieur 20 et les extrémités libres des ailes 21, 22 et 26, 27 des profilés 20 et 25 sont placées bord à bord.

Le fond 23 du profilé extérieur 20 et le fond 28 du profilé intérieur 25 forment un caisson 29 de section sensiblement rectangulaire et relié à la poutre transversale 7.

## Revendications

1. Train arrière de véhicule automobile comprenant un essieu en H dit semi-rigide comportant deux bras de suspension longitudinaux (2) portant chacun une fusée de roue (5), reliés par une poutre transversale (7) qui constitue la branche transversale du H et qui possède une section ouverte dont l'ouverture est dirigée vers l'avant du véhicule, cet essieu étant relié à la partie suspendue du véhicule par des articulations (3) élastiques et par des jambes de force (6) comportant chacune un amortisseur et un ressort hélicoïdal disposés concentriquement, dont les points d'attache respectifs (5) sur les bras de suspension sont proches des fusées associées (4), caractérisé en ce que chaque bras de suspension (2) comprend deux plaques métalliques (10, 11) sensiblement parallèles, fixées à leur partie avant sur la poutre transversale (7) et portant à leur partie arrière la fusée de roue (4) et l'attache (5) de la jambe de force (6), un flasque latéral métallique (12), perpendiculaire aux plaques (10, 11) et s'étendant le long du bord extérieur de ces dernières, et au moins un flasque intermédiaire métallique (13), fixé entre et perpendiculairement aux plaques (10, 11) et s'étendant sur toute la longueur de ces plaques (10, 11), lesdites plaques (10, 11) ayant sur au moins une partie de leur longueur, une largeur qui varie en croissant, depuis une partie arrière vers une partie avant, suivant une fonction sensiblement parabolique et ledit flasque latéral et ledit flasque intermédiaire formant un caisson relié à la poutre transversale (7).

2. Train arrière selon la revendication 1, caractérisé en ce qu'il comprend deux flasques intermédiaires métalliques (13a, 13b) fixés entre et perpendiculairement aux plaques (10, 11) et s'étendant sur toute la longueur de ces plaques, ces flasques intermédiaires (13a, 13b) et le flasque latéral (12) formant deux caissons reliés à la poutre transversale (7).

3. Train arrière selon la revendication 1, caractérisé en ce que chaque bras de suspension (2) comprend deux tôles embouties formant deux profilés (20, 25) de section en U et emboîtés l'un dans l'autre, les ailes (21, 22 ; 26, 27) des profilés ayant, sur au moins une partie de leur longueur, une largeur qui varie en croissant, depuis une partie arrière vers une partie avant, suivant une fonction sensiblement parabolique.

4. Train arrière selon les revendications 1 et 3, caractérisé en ce que le fond (23) du profilé extérieur (20) forme un flasque latéral portant un organe (3) d'articulation sur la partie suspendue du véhicule, et la fusée de roue (4).

5. Train arrière selon la revendication 3, caractérisé en ce que les ailes (26, 27) du profilé intérieur (25) ont une largeur inférieure aux ailes (21, 22) du profilé extérieur (20).

6. Train arrière selon les revendications 3 à 5, caractérisé en ce que les extrémités libres des ailes (21, 22 ; 26, 27) des profilés (20, 25) sont placées bord à bord et le fond (28) du profilé intérieur (25) et le fond (23) du profilé extérieur (20) forment un caisson (29) relié à la poutre transversale (7).

7. Train arrière suivant les revendications 1 à 6, caractérisé en ce que le flasque latéral (8, 12, 23) a une forme générale en S et comporte deux parties d'extrémité sensiblement planes et une partie intermédiaire incurvée.

8. Train arrière suivant la revendication 7, caractérisé en ce que la poutre transversale (7) et l'organe (3) d'articulation sur la partie suspendue sont fixés sur la partie d'extrémité avant du flasque latéral (8, 12, 23).

9. Train arrière suivant la revendication 1, caractérisé en ce que la poutre transversale (7) est un profilé à section en oméga, dont le plan de symétrie (V-V) passe sensiblement par les points (Q) de contact entre les roues du train et le sol.

10. Train arrière suivant la revendication 9, caractérisé en ce que le plan de symétrie (V-V) de la poutre transversale (7) passe sensiblement par l'axe des organes (3) d'articulation des bras sur la partie suspendue du véhicule.

11. Train arrière suivant les revendications 1 à 10, caractérisé en ce qu'une barre anti-roulis (9) est disposée entre les extrémités avant des flasques latéraux (8) des bras de suspension.

12. Train arrière suivant les revendications 10 et 11, caractérisé en ce que le plan de symétrie (V-V) de la poutre transversale (7) contient l'axe de la barre de torsion (9).

## Patentansprüche

1. Hinteres Fahrwerk eines Kraftfahrzeugs, aufweisend eine sogenannte halbstarre Achse in H-Form mit zwei längsgerichteten jeweils einen Radzapfen (5) aufweisenden Aufhängungsarmen (2), die über einen Querträger (7) verbunden sind, der den Quersteg des H bildet und einen offenen Querschnitt aufweist, dessen Öffnung zu der Vorderseite des Fahrzeugs hin orientiert ist, wobei die Achse mit dem aufgehängten Teil des Fahrzeugs über elastische Gelenke (3) und Fahrgestellstützen (6), die konzentrisch zueinander angeordnet jeweils einen Dämpfer und eine Schraubenfeder aufweisen, und deren jeweilige Befestigungsstellen (5) an den Aufhängungsarmen nahe dem zugehörigen Zapfen (4) sind, verbunden ist, dadurch gekennzeichnet, daß jeder Aufhängungsarm (2) zwei metallische Platten (10, 11) aufweist, die im wesentlichen parallel zueinander sind, deren vorderes Ende an dem Querträger (7) befestigt ist und die an ihrem hinteren Teil den Radzapfen (4) und die Befestigung (5) der Fahrgestellstütze (6), einen metallischen Seitenflansch (12), der senkrecht zu den Platten (10, 11) ist und sich entlang dem äußeren Rand der Platten (10, 11) erstreckt und zumindest eine metallische Zwischenwand (13) aufweist, die zwischen und senkrecht zu den Platten (10, 11) befestigt ist und sich über die gesamte Länge der Platten (10, 11) erstreckt, wobei die Platten (10, 11) zumindest über einen Teil ihrer Länge eine Schenkellänge aufweisen, die variiert, indem sie von einem hinteren Teil zu einem vorderen Teil hin einer im wesentlichen parabolischen Funktion folgend zunimmt, und der Seitenflansch und die Zwischenwand einen mit dem Querträger (7) verbundenen Kasten bilden.

2. Hinteres Fahrwerk gemäß Anspruch 1, dadurch gekennzeichnet, daß er zwei metallische Zwischenwände (13A, 13B) aufweist, die zwischen und senkrecht zu den Platten (10, 11) befestigt sind und sich über die gesamte Länge der Platten (10, 11) erstrecken, wobei die Zwischenwände (13A, 13B) und der Seitenflansch (12) zwei Kästen bilden, die mit dem Querträger (7) verbunden sind.

3. Hinteres Fahrwerk gemäß Anspruch 1, dadurch gekennzeichent, daß jeder Aufhängungsarm (2) zwei tiefgezogene Bleche aufweist, die zwei mit U-förmigem Querschnitt ausgebildete Profilstäbe (20, 25) bilden, von denen der eine in den anderen eingesetzt ist, wobei die Schenkel (21, 22; 26, 27) der Profilstäbe, zumindest über einen Teil ihrer Länge, eine Schenkellänge aufweisen, die variiert, indem sie einer im wesentlichen parabolischen Funktion folgend von einem hinteren Teil zu einem vorderen Teil hin zunimmt.

4. Hinteres Fahrwerk gemäß Anspruch 1 und 3, dadurch gekennzeichnet, daß der Steg (23) des äußeren Profilstabes (20) einen Seitenflansch bildet, der eine Vorrichtung (3) der Schwenkbarkeit an dem aufgehängten Fahrzeugteil und den Radzapfen (4) aufweist.

5. Hinteres Fahrwerk gemäß Anspruch 3, dadurch gekennzeichnet, daß die Schenkel (26, 27) des inneren Profilstabes (25) eine geringere Schenkellänge aufweisen als die Schenkel (21, 22) des äußeren Profilstabes (20).

6. Hinteres Fahrwerk gemäß einem der Ansprüche 3 bis 5, dadurch gekennzeichnet, daß die freien Enden der Schenkel (21, 22; 26, 27) der Profilstäbe (20, 25) stumpf zueinander angeordnet sind und der Steg (28) des inneren Profilstabes (25) und der Steg (23) des äußeren Profilstabes (20) einen Kasten (29) bilden, der mit dem Querträger (7) verbunden ist.

7. Hinteres Fahrwerk gemäß einem der Ansprüche 1 bis 6, daß der Seitenflansch (8, 12, 23) eine grundsätzlich S-förmige Gestalt hat und zwei im wesentlichen ebene Endteile und einen bogenförmigen Mittelteil aufweist.

8. Hinteres Fahrwerk gemäß Anspruch 7, dadurch gekennzeichnet, daß der Querträger (7) und die Vorrichtung (3) der Schwenkbarkeit an dem aufgehängten Teil an dem vorderen Endteil des Seitenflansches (8, 12, 23) befestigt sind.

9. Hinteres Fahrwerk gemäß Anspruch 1, dadurch gekennzeichnet, daß der Querträger (7) ein Profilstab mit einem Querschnitt in Form eines Ω ist, dessen symmetrieebene (V-V) im wesentlichen durch die Kontaktstellen (Q) zwischen den Rädern des hinteren Fahrwerks und dem Boden verläuft.

10. Hinteres Fahrwerk gemäß Anspruch 9, dadurch gekennzeichnet, daß die Symmetrieebene (V-V) des Querträgers (7) im wesentlichen durch die Achse der Vorrichtungen (3) der Schwenkbarkeit der Arme an dem aufgehängten Fahrzeugteil verläuft.

11. Hinteres Fahrwerk gemäß einem der Ansprüche 1 bis 10, dadurch gekennzeichnet, daß ein Anti-Rollbewegungs-Stab (9) zwischen den vorderen Enden der Seitenflansche (8) der Aufhängungsarme angeordnet ist.

12. Hinteres Fahrwerk gemäß Anspruch 10 oder 11, dadurch gekennzeichnet, daß die Symmetrieebene (V-V) des Querträgers (7) die Achse des Torsionsstabes (9) enthält.

## Claims

1. Rear axle assembly of a motor vehicle, comprising a so-called semi-rigid H-shaped axle comprising two longitudinal suspension arms (2) each bearing a wheel spindle (4), connected by a transverse beam (7) which constitutes the crossbar of the H and which has an open section, the opening of which is directed towards the front of the vehicle, this axle being connected to the suspended part of the vehicle by resilient joints (3) and by load-bearing struts (6) each comprising a shock absorber and a helical spring arranged concentrically, the respective points of attachment (S) to the suspension arms being close to the associated spindles (4), characterised in that each suspension arm (2) comprises two substantially parallel metal plates (10, 11) fixed at their front ends to the transverse beam (7) and carrying at their rear end the wheel spindle (4) and the attachment means (5) for the load-bearing strut (6), a lateral metal cheek (12) perpendicular to the plates (10, 11) and extending along the outer edge of said plates, and at least one intermediate metal cheek (13), fixed between and perpendicular to the plates (10, 11) and extending along the entire length of these plates (10, 11), the plates (10, 11) having a width, over at least part of their length, which increases from a rear part towards a front part, following a substantially parabolic function, and said lateral cheek and said intermediate cheek forming a box connected to the transverse beam (7).

2. Rear axle assembly according to claim 1,
characterised in that it comprises two intermediate metal cheeks (13a, 13b) fixed between and perpendicular to the plates (10, 11) and extending over the entire length of these plates, these intermediate cheeks (13a, 13b) and the lateral cheek (12) forming two boxes connected to the transverse beam (7).

3. Rear axle assembly according to claim 1,
characterised in that each suspension arm (2) comprises two stamped metal plates forming two profiled members (20, 25) of U-shaped cross section fitted one inside the other, the wings (21, 22; 26, 27) of the profiled members having a width, over at least part of their length, which increases from a rear part towards a front part, following a substantially parabolic function.

4. Rear axle assembly according to claims 1 and 3,
characterised in that the base (23) of the outer profiled member (20) forms a lateral cheek bearing a member (3) for joining to the suspended part of the vehicle, and the wheel spindle (4).

5. Rear axle assembly according to claim 3,
characterised in that the wings (26, 27) of the inner profiled member (25) are narrower than the wings (21, 22) of the outer profiled member (20).

6. Rear axle assembly according to claims 3 to 5,
characterised in that the free ends of the wings (21, 22; 26, 27) of the profile members (20, 25) are placed edge to edge and the base (28) of the inner profiled member (25) and the base (23) of the outer profiled member (20) form a box (29) connected to the transverse beam (7).

7. Rear axle assembly according to claims 1 to 6,
characterised in that the lateral cheek (8, 12, 23) is generally S-shaped and comprises two substantially flat end portions and a curved intermediate portion.

8. Rear axle assembly according to claim 7,
characterised in that the transverse beam (7) and the member (3) for joining to the suspended part are fixed to the front end part of the lateral cheek (8, 12, 23).

9. Rear axle assembly according to claim 1,
characterised in that the transverse beam (7) is a profiled member with an omega-shaped section, the plane of symmetry (V-V) of which passes substantially through the points (Q) of contact between the axle assembly wheels and the ground.

10. Rear axle assembly according to claim 9,
characterised in that the plane of symmetry (V-V) of the transverse beam (7) passes substantially through the axis of the members (3) for joining the arms to the suspended part of the vehicle.

11. Rear axle assembly according to claims 1 to 10,
characterised in that an anti-roll bar (9) is positioned between the front ends of the lateral cheeks (8) of the suspension arms.

12. Rear axle assembly according to claims 10 and 11,
characterised in that the plane of symmetry (V-V) of the transverse beam (7) contains the axis of the torsion bar (9).
